# EUROPEAN PATENT SPECIFICATION

(11) **EP 4 472 896 B1**
(45) Date of publication and mention of the grant of the patent: **19.11.2025**
(21) Application number: 23701749.6
(22) Date of filing: 25.01.2023
(51) Int. Cl.: B65C 9/00, F16P 3/00, F16M 11/04, F16M 11/20

(54) **LABELLING MACHINE WITH A FOOTBOARD**
ETIKETTIERMASCHINE MIT FUSSBRETT
MACHINE D'ÉTIQUETAGE DOTÉE D'UN MARCHEPIED

(30) Priority: 04.02.2022 IT 202200001991
(43) Date of publication of application: 11.12.2024
(73) Proprietor: P.E. Labellers S.p.A., 46047 Porto Mantovano (MN) (IT)
(72) Inventor: BARDINI, Riccardo, 37010 Torri del Benaco (IT)
(74) Representative: Modiano, Micaela Nadia
(86) International application number: PCT/EP2023/051788
(87) International publication number: WO 2023/148062

(56) References cited:
- WO-A1-2012/019824
- CN-U- 202 212 959
- JP-A- H10 175 754
- US-A1- 2017 057 766
- US-B1- 10 710 508

## Description

The present invention relates to a labeling machine.

Labeling machines are known, which allow to apply labels on containers. Document WO 2012/019824 discloses a known labeling machine.

Generally, these machines comprise a frame which supports conveyance means for the containers to be labeled along an advancement path and they have at least one labeling unit which carries out the transfer of a label, normally taken from a continuous label ribbon, onto the individual containers that transit on the conveyance means.

Typically, the conveyance means for the containers comprise a carousel, which is mounted so that it can rotate on a footing and is provided peripherally with supporting pans for the individual containers, which can be moved in rotation in order to rotate the containers about their axes.

In some machines of this type, the labeling units are supported by moveable trolleys which are positioned in the vicinity of the carousel and are detachably engaged with the footing of said carousel. In other types of machines of this kind, the labeling units are mounted on fixed benches or tables, which are also positioned proximate to the carousel.

Usually, the labeling units are constituted by a unit for unwinding a label ribbon from a reel and by a transfer drum, the function of which is to bring the labels, obtained by cutting the label ribbon, to adhere to the containers arriving on the carousel.

In these machines, many maintenance operations and also small interventions, like the insertion of new reels of label ribbons or changing the format of the labels, are carried out by operators on the labeling unit, working from above with the aid of movable footboards, stools or steps which are positioned next to the labeling unit.

It often happens that the footboards thus used are left by the operators, after use, in the position in which they had placed them during the maintenance operations or interventions on the labeling unit, and they remain to clutter up the area around the machine, becoming, in some cases, actually hazardous, as they can cause operators to trip.

Besides, it is not always convenient for operators to go and stow the footboard they used in a safe area every time, only to then position it near the machine again when it is needed, because the footboard, insofar as it assists for example even the simple operation to change format, is used with a certain regularity.

The aim of the present invention is to provide a labeling machine that is capable of improving the known art in one or more of the above mentioned aspects.

Within this aim, an object of the invention is to provide a labeling machine that enables operators to carry out interventions on the labeling unit by working conveniently from above and which enables those operators to work in the vicinity of the machine, without hazards, even after carrying out the interventions on the labeling unit.

Another object of the invention is to provide a labeling machine that does not force the operators to make continual trips back and forth every single time in order to move footboards, stools or steps close to the machine, in order to enable the operators to work from above on the labeling unit, or to a safe area, far from the machine, in order to prevent those footboards, stools or steps from posing a hindrance to the free movements of the operators around the machine.

Another object of the invention is to provide a labeling machine that is capable of offering maximum guarantees of safety and reliability in its operation and use.

Another object of the present invention is to provide a labeling machine that in terms of construction is simple to provide.

A further object of the present invention is to overcome the drawbacks of the background art in a manner that is alternative to any existing solutions.

Another object of the invention is to provide a labeling machine that can be produced at low cost.

This aim and these and other objects which will become better apparent hereinafter are achieved by a labeling machine according to claim 1, optionally provided with one or more of the characteristics of the dependent claims.

Further characteristics and advantages of the invention will become better apparent from the description of a preferred, but not exclusive, embodiment of the labeling machine according to the invention, which is illustrated by way of non-limiting example in the accompanying drawings wherein:
Figure 1 is a perspective view of the machine according to the invention with a footboard in an active condition;
Figure 2 is a perspective view of the machine according to the invention according to a possible embodiment and with the footboard in the inactive condition;
Figure 3 shows the machine of Figure 2 with the footboard in the active condition;
Figure 4 is a perspective view of another embodiment of the machine according to the invention with the footboard in the inactive condition;

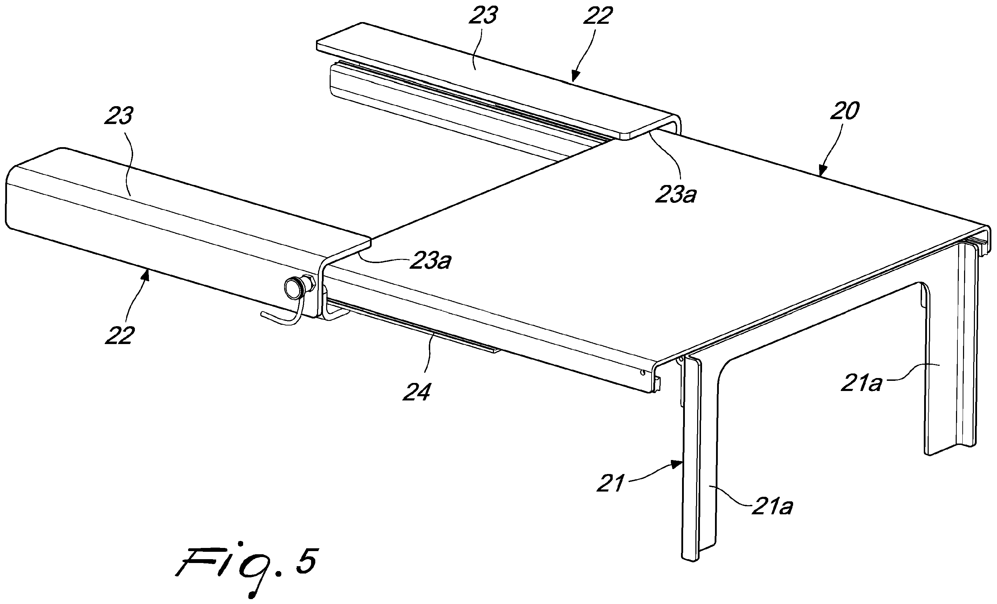

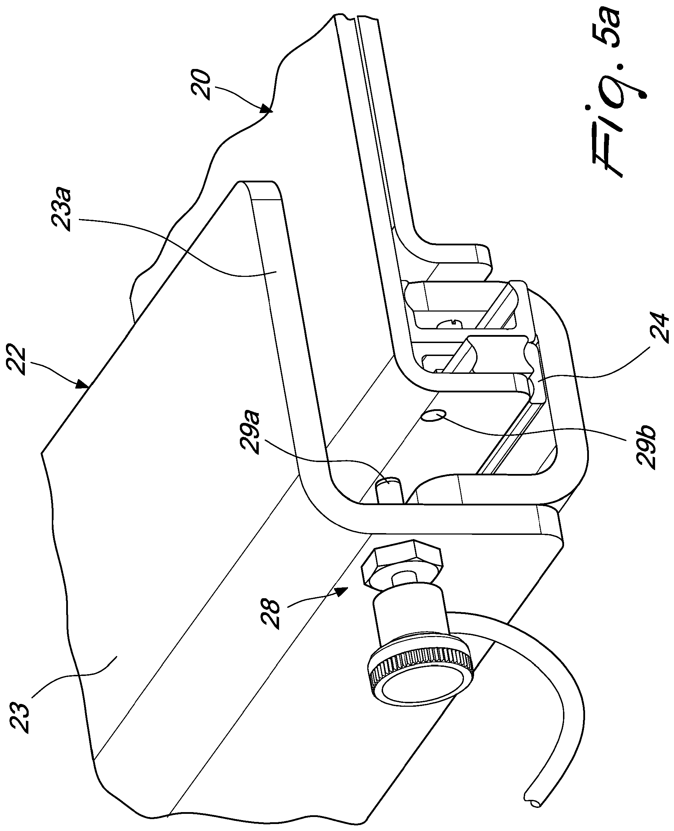

Figure 5 is a perspective view of a footboard of the machine according to the invention in the active condition;
Figure 5a is an enlarged-scale perspective view of a detail of the machine according to the invention;

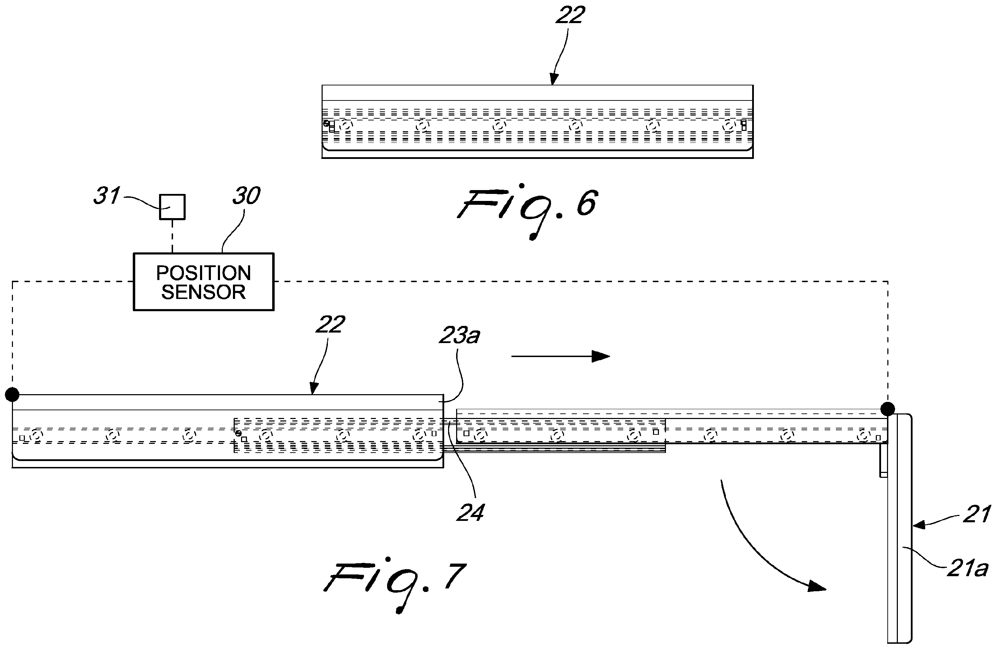

Figure 6 is a schematic side view of the footboard of Figure 5 in the inactive condition;
Figure 7 is a schematic side view of the footboard of Figure 5 in the active condition;
Figure 8 is a perspective view of a different embodiment of the footboard in the active condition;
Figure 9 is a side view of the footboard in the embodiment of Figure 8 in the inactive condition;
Figure 10 is a side view of the embodiment of Figure 8 of the footboard in a step of transition from the inactive condition to the active condition;
Figure 11 is a side view of the embodiment of Figure 8 in the active condition;

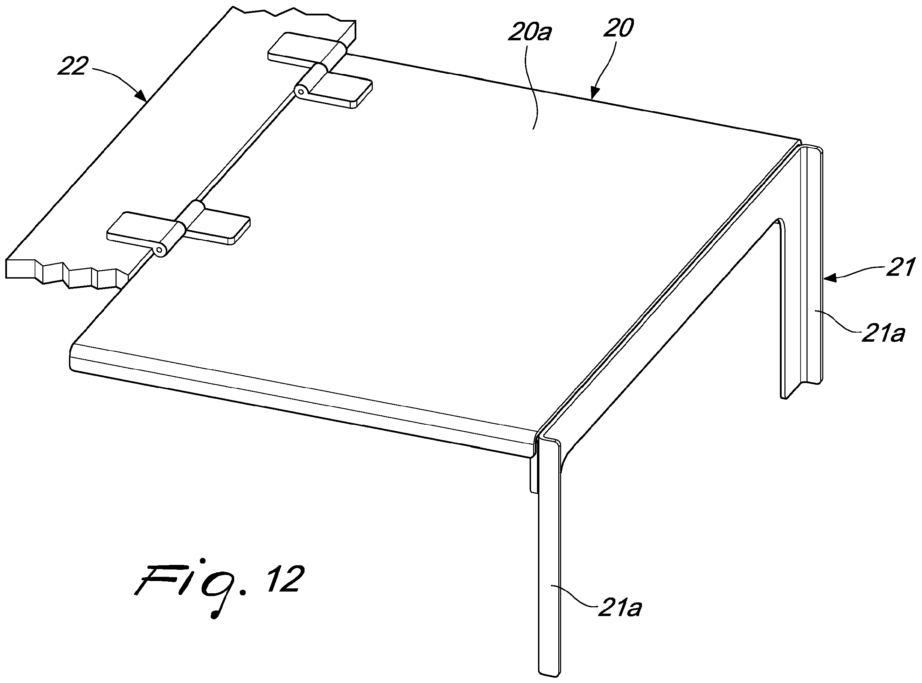

Figure 12 is a perspective view of an additional embodiment of the footboard in the active condition;

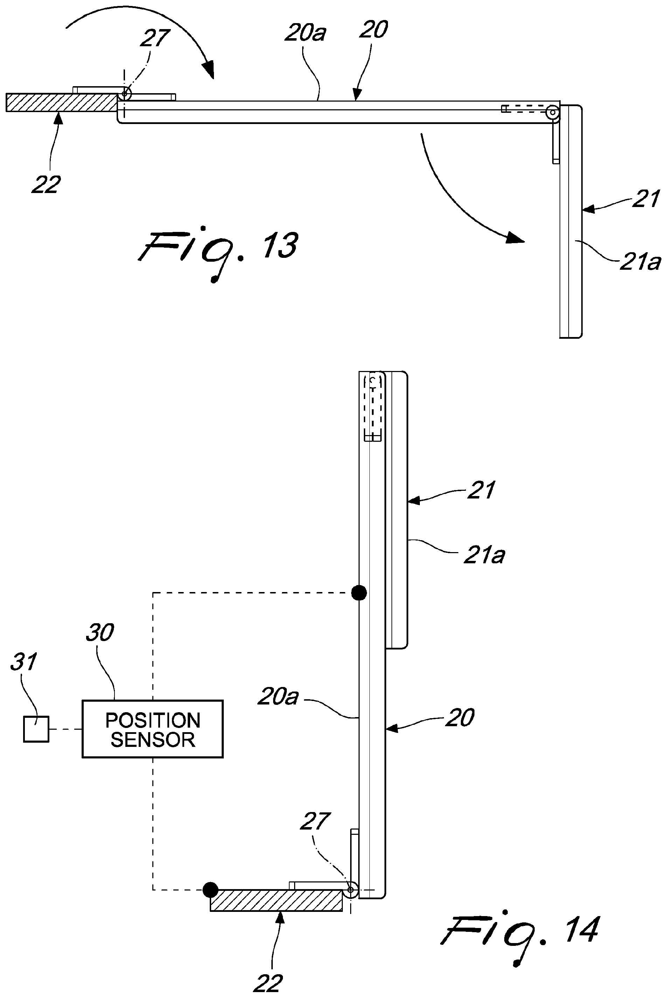

Figure 13 is a side view of the embodiment of Figure 12;
Figure 14 is a side view of the footboard according to the embodiment of Figure 12 in the inactive condition.

With reference to the figures, the labeling machine according to the invention, generally designated by the reference numeral 1, comprises a frame 2 which supports conveyance means 3 for the containers 4 to be labeled and at least one labeling unit 5 for the containers 4 conveyed by the conveyance means 3.

For example, the labeling unit 5 can comprise, as is per se known, a cutting and transfer drum 6 which is designed to receive a label ribbon 7, on which a plurality of labels are printed in succession and which is fed by an unwinding assembly 8 which takes it from a spool 9, supported by a corresponding supporting roller 10, with the interposition of a tensioning device 11.

If the labels are not pre-glued, then also on the labeling unit 5, laterally to the cutting and transfer drum 6, there is also a gluing assembly 12, which is designed to transfer the glue onto the labels to be applied to the containers 4.

In more detail, the frame 2 can, conveniently, comprise a footing 13, which supports the conveyance means 3, which can, for example, comprise, in turn, a rotating carousel 14, which is provided peripherally with rotating supporting pans 15 for the individual containers 4.

The frame 2 can, advantageously, further comprise at least one supporting structure 16, which is arranged proximate to the footing 13 and is designed, in turn, to support the labeling unit 5.

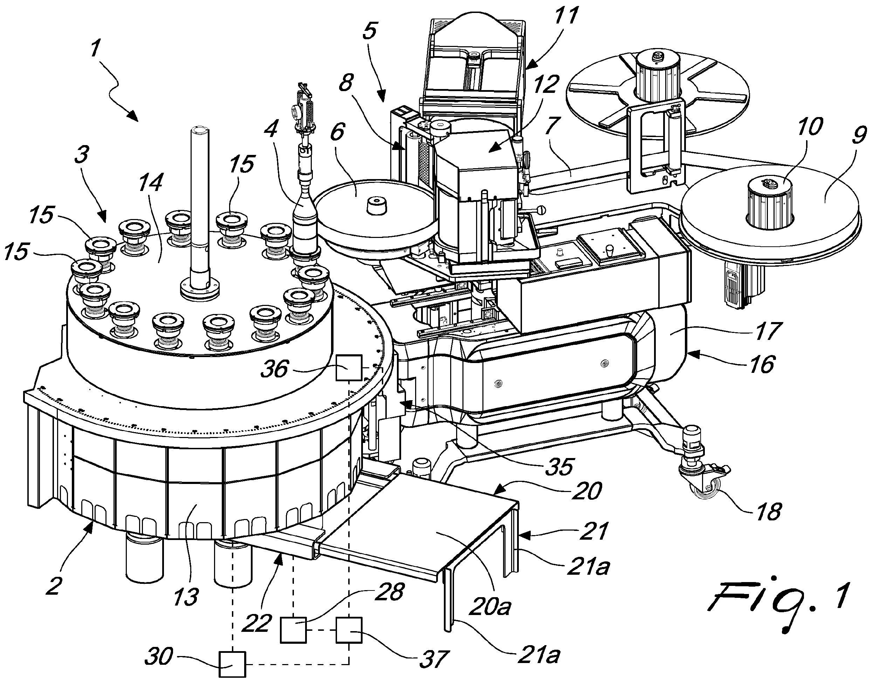

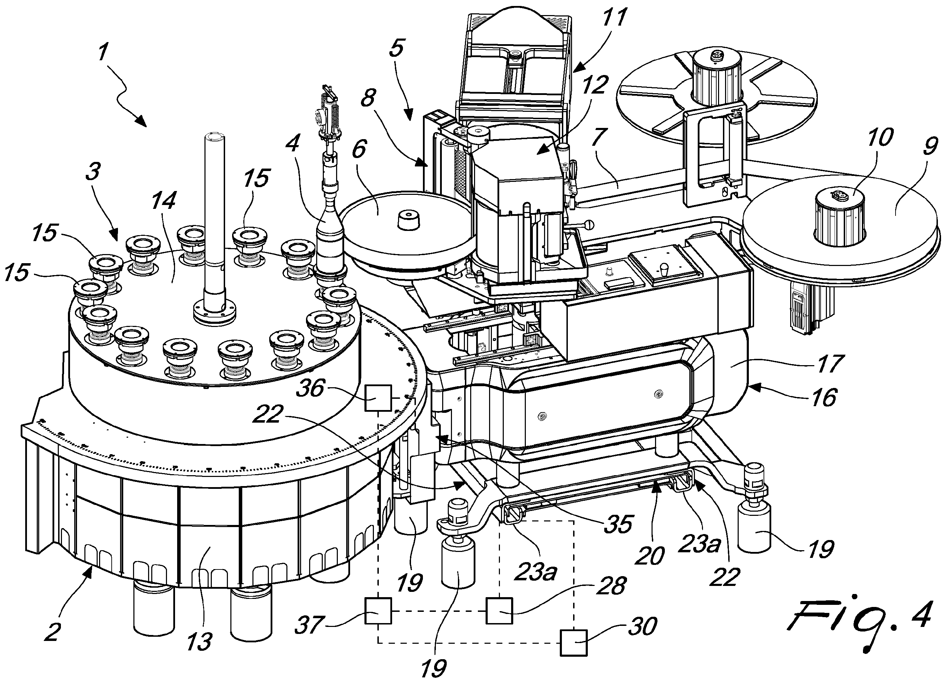

The supporting structure 16 can be movable with respect to the footing 13 and in such case it is, for example, provided by a trolley 17, provided with wheels 18, as in Figures 1, 2 and 3, in order to allow the convenient approaching or distancing of the labeling unit 5 with respect to the conveyance means 3, or it can be fixed with respect to the footing 13 and, in such case, it can be provided by a table or by a bench 18, conveniently provided, in a lower region, with stable elements 19 for resting on the floor, as in Figure 4.

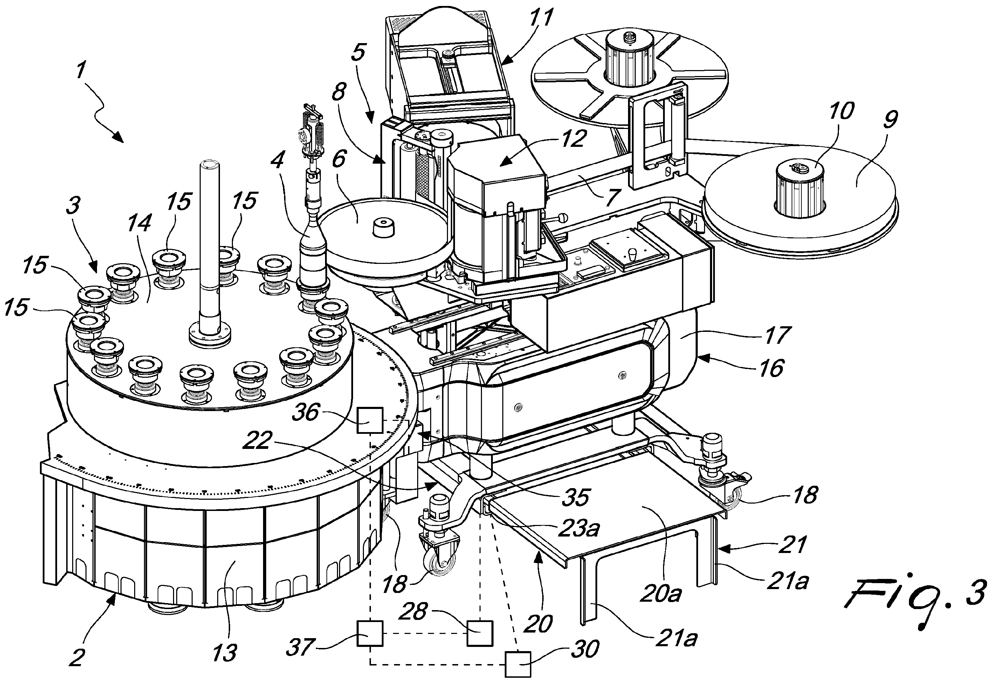

According to the invention, the frame 2 supports at least one footboard 20, which can be moved between an active condition, shown for example in Figures 1 and 3, in which it defines a resting surface 20a, arranged spaced apart above the floor, on which the operator can place at least one foot, so as to enable said operator to intervene on the labeling unit 5 from a position at a higher elevation than that of the floor, and at least one inactive condition, in which said footboard occupies a smaller space, laterally to the frame 2, with respect to what is found in the active condition, so as not to pose a hindrance to the operators when it is not in use.

As illustrated, the footboard 20 can be constituted by a plate-like element, so as to provide the resting surface 20a with the face thereof that is directed upward when the footboard 20 is in the active condition.

Preferably, the footboard 20 is provided with means for resting 21 on the floor, which are constituted by at least one supporting foot 21a.

Such means for resting 21 are, conveniently, structured to be able to pass from a folded condition, which such means can assume, in particular, when the footboard 20 is in the inactive condition, in which, in particular, such means are in abutment against the footboard, and an extended condition, which such means can assume when the footboard 20 is brought to the active condition, in which they are capable of engaging the floor, and vice versa.

Preferably, the footboard 20 and the means for resting 21 are structured so that, when the means for resting 21 are located in the folded condition, they are inserted in the perimetric space occupation of the footboard 20.

As shown in the figures, the means for resting 21 are, advantageously, arranged substantially at the end of the footboard 20 that is located, with the footboard 20 in the active condition, at the opposite end with respect to the frame 2, so that they can prevent the footboard 20 from collapsing when the operator steps on to the resting surface 20a.

According to the embodiment illustrated, the means for resting 21 are provided by a pair of supporting feet 21a which are connected integrally to each other and are pivoted to the footboard 20, so as to be movable angularly between a first position, which corresponds to the folded condition of the means for resting 21, in which they are folded onto the footboard 20, so as to be arranged substantially parallel to a face of the footboard 20, preferably to the face of the footboard 20 that is on the opposite side with respect to the face that provides the resting surface 20a, and a second position, which corresponds to the extended condition of the means for resting 21, in which they are arranged substantially perpendicular to the resting surface 20a of the footboard 20.

It is possible, for example, for the footboard 20, when it is in the inactive condition, to be arranged at least partially within the perimetric space occupation of the frame 2.

In more detail, the footboard 20 can, advantageously, be connected to the frame 2 by way of at least one supporting body 22, which is fixed, by means of bolts, welding or the like, to the frame 2 and, more preferably, to a lower face of the frame 2.

According to a first embodiment, the footboard 20 can be mounted so that it can move slideably, with respect to the frame 2, between the active condition and the inactive condition.

In this case, the footboard 20 is mounted on a pair of linear guides 23, which extend substantially parallel to the resting surface 20a and which are defined on two supporting bodies 22 which are mutually opposite, with respect to the footboard 20, and, conveniently, are constituted by profiled elements.

Advantageously, the linear guides 23 have an end 23a thereof directed outward from the frame 2 and they are, conveniently, structured so that the footboard 20 can protrude, at least with a portion thereof, from the end 23a thereof, when the footboard 20 is brought to the active condition.

The ends 23a of the linear guides 23 can be contained inside the bulk of the frame 2 or they can also protrude, preferably slightly, from the external lateral surface of the frame 2.

Preferably, the footboard 20 is joined to the linear guides 23 by means of the interposition of sliding support bars 24, which can slide with respect to the linear guides 23 and which support the footboard 20 so that it can slide.

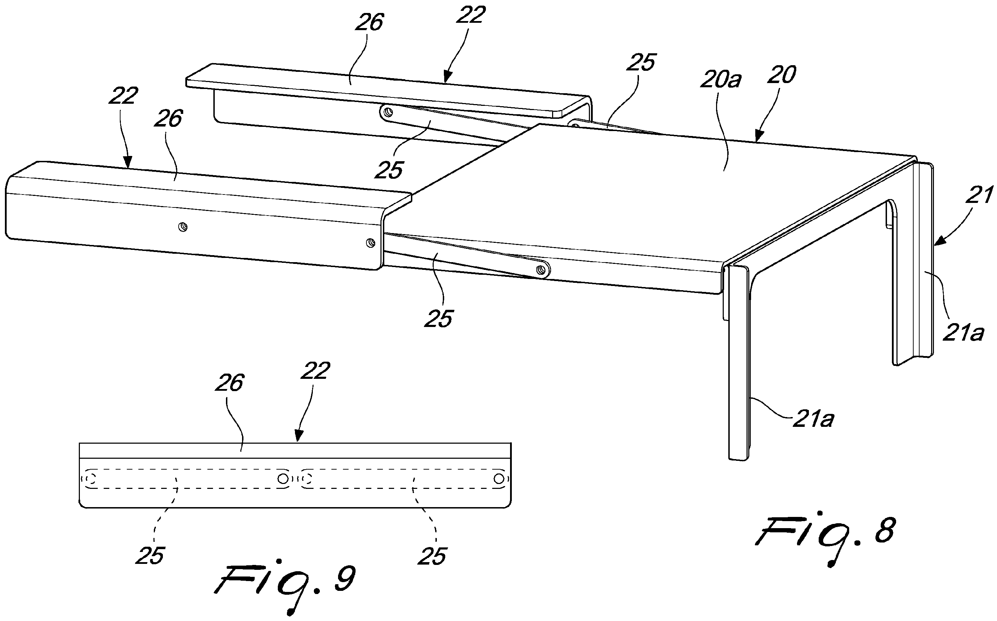

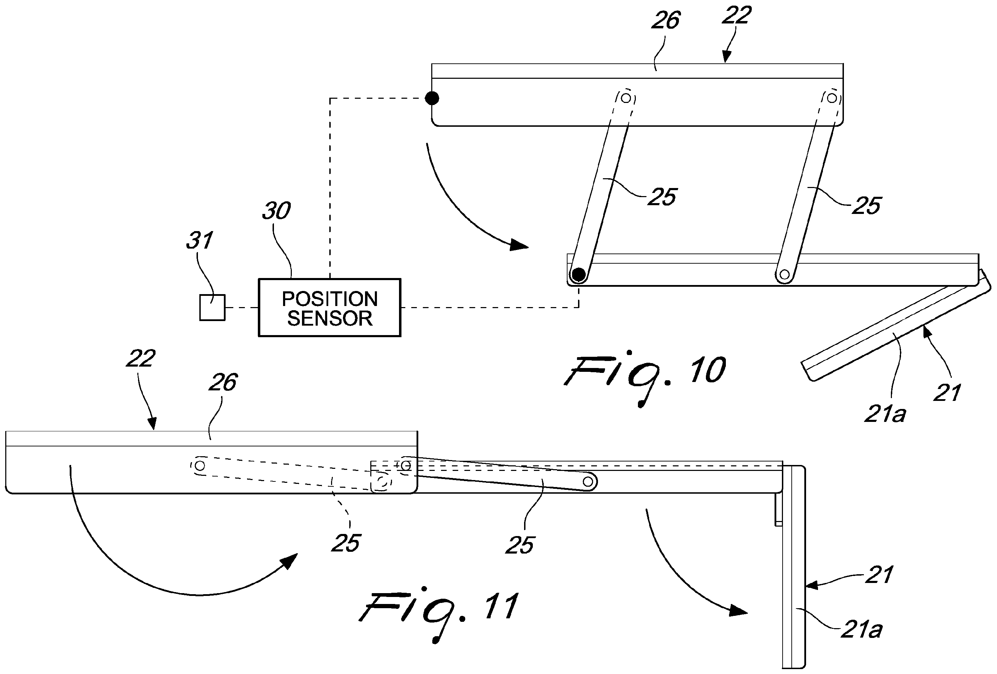

According to a different embodiment, shown in Figures 8-11, the footboard 20 is connected to the frame 2 by means of at least one pair of linkages 25 which can oscillate, are substantially mutually parallel, and are arranged according to an articulated parallelogram, and which enable the transition of the footboard 20 from the active condition to the inactive condition and vice versa by way of a movement along a curved path.

More specifically, the linkages 25 are pivoted, at one end, to the footboard 20 and at the other end to a pair of supporting bodies 22, which are mutually opposite with respect to the footboard 20, are constituted conveniently by longitudinal support members 26, are arranged with their axes substantially horizontally, and are anchored integrally to the frame 2, preferably at a lower face of the frame 2 which is arranged spaced apart from the floor.

In particular, with this embodiment, the footboard 20 in the active condition is arranged in a position laterally aligned with the supporting bodies 22 along a substantially horizontal direction, while in the inactive condition it is in a position interposed between the supporting bodies 22, preferably within the bulk of the frame 2, as can be seen in the figures.

In another possible embodiment, the footboard 20 can be connected, at one of its ends, to the frame 2 so as to oscillate about a rotation axis 27 that is substantially parallel to the floor, so as to be able to pass from the active condition to the inactive condition and vice versa by way of a rotary motion about the rotation axis 27.

In this case, the supporting body 22 can be a plate which is fixed in a suitable manner to the lower part of the frame 2, more specifically to a face of the latter that is spaced apart from the floor, and to which the footboard 20 is pivoted, with one of its ends, about the rotation axis 27.

The rotation axis 27 is, conveniently, positioned proximate to the external perimeter of the frame 2, so that, when the footboard 20 is brought to the inactive condition, the footboard 20 can be positioned resting against the external lateral surface of the frame 2, in particular with the resting surface 20a arranged substantially vertically or in any case substantially perpendicular to the floor, with a consequent smaller lateral space with respect to the active condition, in which the footboard 20 is instead with its resting surface 20a arranged substantially horizontally or in any case substantially parallel to the floor.

As illustrated in Figure 1, it is possible that the footboard 20 can be mounted on the part of the frame 2 constituted by the footing 13, in a position proximate to the labeling unit 5, so that, when it is brought to the active condition, it can be used by the operators for their interventions on the labeling unit 5.

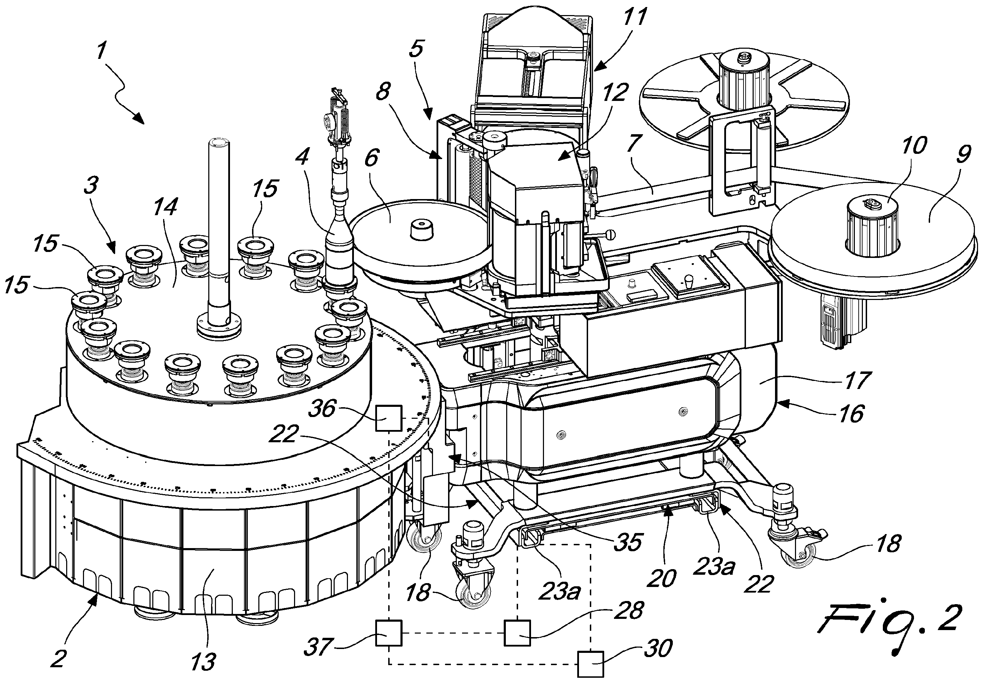

Alternatively, it is also possible that the footboard 20 can be mounted on the part of the frame 2 constituted by the supporting structure 16 of the labeling unit 5, as in the example of Figures 2 and 3.

For safety in use of the footboard 20, there are, advantageously, removable means for locking 28 the footboard 20 in the inactive condition and in the active condition.

Such removable means for locking 28 can be activated on command by the operator or, more preferably, they can be activated automatically upon the positioning of the footboard 20 in the active condition and in the inactive condition.

The activation of the removable means for locking 28 can be provided by snap action, using elastic means, or it can be actuated by actuation means of electromechanical type.

For example, the removable means for locking 28 can be constituted by at least one engagement element 29a, supported by the frame 2 and more preferably by one of the supporting bodies 22, and by corresponding engagement seats 29b, defined in the footboard 20, which are removably engageable by the engagement element 29a, when the footboard 20 is, respectively, positioned in the active condition and in the inactive condition.

For example, the engagement element 29a can be constituted by a piston, which can be inserted into holes which provide the engagement seats 29b and which can be moved manually between a locking position, in which it is inserted in the hole that corresponds to the condition in which the footboard 20 happens to be, and a release position, in which it is disengaged from the holes so as to allow the movement of the footboard 20 between the active condition and the inactive condition.

Advantageously, sensor means 30 are further provided which are capable of detecting the presence of the footboard 20 in the active condition and in the inactive condition.

For example, such sensor means 30 are capable of detecting the relative position between two points located respectively on the supporting body 22 and on the footboard 20.

Advantageously, the sensor means 30 are connected to signaling means 31, for example of acoustic and/or luminous type, which are activatable on command as a consequence of the detection, by the sensor means 30, of the positioning of the footboard 20 in an intermediate position between the active condition and the inactive condition, so as to alert the operator to an incorrect positioning of the footboard 20.

Preferably, the supporting structure 16 can be detachably engaged to the footing 13, by virtue of fixing means 35, per se known, in particular if the supporting structure 16 is constituted by a trolley 17, and, conveniently, detection means 36, also per se known, are provided for detecting the positioning of the supporting structure 16 in the condition of engagement with the footing 13, by virtue of the fixing means 35.

In this case, in order to prevent the footboard 20 from being positioned in the active condition when the supporting structure 16 is not engaged with the footing 13, with consequent risks in using the footboard 20 and inconveniences of moving the supporting structure 16, the above mentioned removable means for locking the footboard 20 are, advantageously, deactivatable, in order to allow the transition of the footboard from the inactive condition to the active condition, solely as a consequence of the detection - by the detection means 36 - of the positioning in the condition of engagement of the supporting structure 16 with the footing 13.

Conveniently, the removable means for locking 28 are controlled by control means, which are constituted, for example, by an electronic control unit 37, which is functionally connected to the detection means 36 and is configured to send a clearance signal for the deactivation of the removable means for locking 28, solely if the electronic control unit 37 receives, from the detection means 36, a signal indicating that the supporting structure 16 is engaged with the footing 13.

Conveniently, the engagement element 29a can be associated with a sensor element which is connected to the electronic control unit 37 for communicating the status of engagement or disengagement from the engagement seats 29b in which the engagement element 29a happens to be.

Advantageously, again for reasons of safety, the fixing means 35 of the supporting structure 16 to the footing 13 can be furthermore deactivated solely as a consequence of the detection by the sensor means 30 of the positioning of the footboard 20 in the inactive condition.

Conveniently, the fixing means 35 are controlled by the electronic control unit 37, which is connected to the sensor means 30 and is configured to send a clearance signal for their deactivation to the fixing means 35, once a signal has been received from the sensor means 30 indicating the positioning of the footboard 20 in the inactive condition.

The use of the machine according to the invention is the following.

The operator positions the supporting structure 16 of the labeling unit 5 in proximity to the footing 13, with the footboard 20 in the inactive condition, and stably engages it with the footing 13 by activating the fixing means 35.

The detection means 36 send a signal to the electronic control unit 37 confirming the engagement of the supporting structure 16 with the footing 13.

At this point, the electronic control unit 37 sends a clearance signal to the removable means for locking 28 which enables the possibility to deactivate the removable means for locking 28, when required by the operator.

In such situation, the operator, if an intervention is required on the labeling unit 5, can bring the footboard 20 from the inactive condition to the active condition, after actuation by said operator of a command to deactivate the removable means for locking 28.

Once the footboard 20 has been brought to the active condition, the removable means for locking 28 activate in order to ensure the footboard 20 is safely maintained in the active condition.

The operator can then step on to the footboard 20 by placing their feet on the resting surface 20a and carry out the required interventions on the labeling unit 5, working conveniently from above i.e. from a higher point of elevation than that at which said operator would work if they kept their feet on the floor.

Once the intervention is concluded, the operator, after getting down from the footboard 20, can return said footboard to the inactive condition, after commanding the deactivation of the removable means for locking 28.

When the footboard 20 has reached the inactive condition, the removable means for locking 28 are activated, so as to ensure that the footboard 20 remains in the inactive condition, at least until it is needed for use once again by the operator.

With the footboard 20 in the inactive condition, the electronic control unit 37 receives a signal from the sensor means 30 on the basis of which the electronic control unit 37 enables the possibility for the operator to deactivate the fixing means 35 holding the supporting structure 16 to the footing 13.

In the event of failure to position, or incorrect positioning of, the footboard 20 in the inactive condition or in the active condition by the operator, the signaling means 31 are activated, preferably after a certain time interval, in order to alert the operator that the footboard 20 is not correctly positioned.

In practice it has been found that the invention fully achieves the intended aim and objects by providing a labeling machine that enables operators to intervene easily on labeling units from appropriate heights, without the need to move footplates, stools or steps every single time.

The invention thus conceived is susceptible of numerous modifications and variations, all of which are within the scope of the appended claims.

In practice, the materials used, as well as the contingent shapes and dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A labeling machine, comprising a frame (2) which supports conveyance means (3) for the containers (4) to be labeled and at least one labeling unit (5) for the containers (4) conveyed by said conveyance means (3), **characterized in that** said frame (2) supports at least one footboard (20) which can move between an active condition, in which it defines a resting surface (20a) for at least one foot of the operator, arranged spaced apart above the floor, and at least one inactive condition, in which it occupies a smaller space, laterally to said frame (2), with respect to said active condition.

2. The labeling machine according to claim 1, **characterized in that** said frame (2) comprises a footing (13), which supports said conveyance means (3), and at least one supporting structure (16), which is arranged proximate to said footing (13) and supports said at least one labeling unit (5).

3. The labeling machine according to claim 1, **characterized in that** said footboard (20) is provided with means for resting (21) on the floor.

4. The labeling machine according to claim 3, **characterized in that** said means for resting (21) on the floor are adapted to transition from a folded condition, which can be assumed with said footboard (20) in said inactive condition, in which they are folded against said footboard (20), and an extended condition, which can be assumed with said footboard (20) in said active condition, in which they are adapted to engage the floor.

5. The labeling machine according to claims 3 or 4, **characterized in that** said means for resting (21) are arranged substantially at the end of said footboard (20) that is located, with said footboard (20) in said active condition, on the opposite side of said frame (2).

6. The labeling machine according to one or more of the preceding claims, **characterized in that** said footboard (20), in said inactive condition, is arranged at least partially within the perimetric space occupation of said frame (2).

7. The labeling machine according to one or more of the preceding claims, **characterized in that** said footboard (20) is mounted so that it can move slideably, with respect to said frame (2), between said active condition and said inactive condition.

8. The labeling machine according to one or more of the preceding claims, **characterized in that** said footboard (20) is connected to said frame (2) by means of at least one pair of linkages (25) which can oscillate, are substantially mutually parallel, and are arranged according to an articulated parallelogram.

9. The labeling machine according to one or more of the preceding claims, **characterized in that** said footboard (20) is connected, at one of its ends, to said frame (2) so that it can oscillate about a rotation axis that is substantially parallel to the floor.

10. The labeling machine according to one or more of the preceding claims, **characterized in that** said footboard (20) is mounted on said footing (13) in a position that is proximate to said labeling unit (5).

11. The labeling machine according to one or more of claims 2-10, **characterized in that** said footboard (20) is mounted on said supporting structure (16).

12. The labeling machine according to one or more of the preceding claims, **characterized in that** it comprises removable means for locking (28) said footboard (20) in said inactive condition and in said active condition.

13. The labeling machine according to one or more of the preceding claims, **characterized in that** it comprises sensor means (30) for the presence of said footboard (20) in said active condition and in said inactive condition.

14. The labeling machine according to claim 13, **characterized in that** said sensor means (30) are connected to signaling means (31) which can be activated on command following the detection, by said sensor means (30), of the positioning of said footboard (20) in an intermediate position between said active condition and said inactive condition.

15. The labeling machine according to one or more of claims 2-14 **characterized in that** said supporting structure (16) can be detachably engaged, by virtue of fixing means (35), to said footing (13), detection means (36) being provided for detecting the positioning of said supporting structure (16) in the condition of engagement with said footing (13).

16. The labeling machine according to claim 15, **characterized in that** said removable means for locking (28) can be deactivated in order to allow the transition of said footboard (20) from said inactive condition to said active condition, upon the detection, by said detection means (36), of the positioning in the condition of engagement of said supporting structure (16) with said footing (13).

17. The labeling machine according to claim 15, **characterized in that** said fixing means (35) can be deactivated upon the detection, by said sensor means (30), of the positioning of said footboard (20) in said inactive condition.

## Patentansprüche

1. Eine Etikettiermaschine, die einen Rahmen (2) umfasst, welcher Beförderungsmittel (3) für die zu etikettierenden Behälter (4) sowie mindestens eine Etikettiereinheit (5) für die Behälter (4) trägt, die von den Beförderungsmitteln (3) befördert werden; **dadurch gekennzeichnet, dass** der Rahmen (2) mindestens ein Fußbrett (20) trägt, das sich zwischen einem aktiven Zustand, in welchem es eine Auflagefläche (20a) für mindestens einen Fuß des Bedieners bestimmt, über dem Boden beabstandet angeordnet, und mindestens einem inaktiven Zustand bewegen kann, in welchem es einen geringeren Raum, seitlich zu dem Rahmen (2), als in dem aktiven Zustand einnimmt.

2. Die Etikettiermaschine gemäß Anspruch 1, **dadurch gekennzeichnet, dass** der Rahmen (2) einen Sockel (13) umfasst, der die Beförderungsmittel (3) trägt, und mindestens eine tragende Struktur (16), welche in der Nähe des Sockels (13) angeordnet ist und die mindestens eine Etikettiereinheit (5) trägt.

3. Die Etikettiermaschine gemäß Anspruch 1, **dadurch gekennzeichnet, dass** das Fußbrett (20) mit Mitteln (21) zum Stehen auf dem Boden ausgestattet ist.

4. Die Etikettiermaschine gemäß Anspruch 3, **dadurch gekennzeichnet, dass** die Mittel (21) zum Stehen auf dem Boden ausgebildet sind, um aus einem zusammengeklappten Zustand, der mit dem Fußbrett (20) in dem inaktiven Zustand eingenommen werden kann, in welchem sie zu dem Fußbrett (20) hin eingeklappt sind, in einen ausgeklappten Zustand überzugehen, der mit dem Fußbrett (20) in dem aktiven Zustand eingenommen werden kann, in welchem sie ausgebildet sind, um in Kontakt mit dem Boden zu stehen.

5. Die Etikettiermaschine gemäß Anspruch 3 oder 4, **dadurch gekennzeichnet, dass** die Mittel (21) zum Stehen im Wesentlichen an dem Ende des Fußbretts (20) angeordnet sind, das sich, wenn das Fußbrett (20) in dem aktiven Zustand ist, auf der gegenüberliegenden Seite des Rahmens (2) befindet.

6. Die Etikettiermaschine gemäß einem oder mehreren der obigen Ansprüche, **dadurch gekennzeichnet, dass** das Fußbrett (20) in dem inaktiven Zustand zumindest teilweise innerhalb des räumlichen Umfangs des Rahmens (2) angeordnet ist.

7. Die Etikettiermaschine gemäß einem oder mehreren der obigen Ansprüche, **dadurch gekennzeichnet, dass** das Fußbrett (20) so montiert ist, dass es sich verschiebbar mit Bezug auf den Rahmen (2) zwischen dem aktiven Zustand und dem inaktiven Zustand bewegen kann.

8. Die Etikettiermaschine gemäß einem oder mehreren der obigen Ansprüche, **dadurch gekennzeichnet, dass** das Fußbrett (20) mit dem Rahmen (2) über mindestens ein Paar von Verbindungselementen (25) verbunden ist, die oszillieren können, im Wesentlichen parallel zueinander und entsprechend einem gelenkigen Parallelogramm angeordnet sind.

9. Die Etikettiermaschine gemäß einem oder mehreren der obigen Ansprüche, **dadurch gekennzeichnet, dass** das Fußbrett (20) an einem seiner Enden mit dem Rahmen (2) verbunden ist, so dass es um eine Rotationsachse oszillieren kann, die im Wesentlichen parallel zum Boden ist.

10. Die Etikettiermaschine gemäß einem oder mehreren der obigen Ansprüche, **dadurch gekennzeichnet, dass** das Fußbrett (20) auf dem Sockel (13) in einer Position montiert ist, die an die Etikettiereinheit (5) angrenzt.

11. Die Etikettiermaschine gemäß einem oder mehreren der Ansprüche 2-10, **dadurch gekennzeichnet, dass** das Fußbrett (20) an der tragenden Struktur (16) montiert ist.

12. Die Etikettiermaschine gemäß einem oder mehreren der obigen Ansprüche, **dadurch gekennzeichnet, dass** sie abnehmbare Mittel (28) zum Verriegeln des Fußbretts (20) in dem inaktiven Zustand und in dem aktiven Zustand umfasst.

13. Die Etikettiermaschine gemäß einem oder mehreren der obigen Ansprüche, **dadurch gekennzeichnet, dass** sie Sensormittel (30) für die Anwesenheit des Fußbretts (20) in dem aktiven Zustand und in dem inaktiven Zustand umfasst.

14. Die Etikettiermaschine gemäß Anspruch 13, **dadurch gekennzeichnet, dass** die Sensormittel (30) mit Signalmitteln (31) verbunden sind, welche auf Befehl nach der Erfassung der Positionierung des Fußbretts (20) in einer intermediären Position zwischen dem aktiven Zustand und dem inaktiven Zustand durch die Sensormittel (30) aktiviert werden können.

15. Die Etikettiermaschine gemäß einem oder mehreren der Ansprüche 2-14, **dadurch gekennzeichnet, dass** die tragende Struktur (16) mit Hilfe von Befestigungsmitteln (35) an dem Sockel (13) gesichert werden kann, wobei Erfassungsmittel (36) bereitgestellt sind, um die Positionierung der tragenden Struktur (16) im Zustand des Eingriffs mit dem Sockel (13) zu erfassen.

16. Die Etikettiermaschine gemäß Anspruch 15, **dadurch gekennzeichnet, dass** die abnehmbaren Mittel (28) zum Verriegeln deaktiviert werden können, um den Übergang des Fußbretts (20) von dem inaktiven Zustand in den aktiven Zustand bei Erfassung der Positionierung der tragenden Struktur (16) im Zustand des Eingriffs mit dem Sockel (13) durch die Erfassungsmittel (16) zu ermöglichen.

17. Die Etikettiermaschine gemäß Anspruch 15, **dadurch gekennzeichnet, dass** die Befestigungsmittel (35) bei Erfassung der Positionierung des Fußbretts (20) in den inaktiven Zustand deaktiviert werden können.

## Revendications

1. Machine d'étiquetage, comprenant un châssis (2) qui supporte des moyens de transport (3) pour les conteneurs (4) à étiqueter et au moins une unité d'étiquetage (5) pour les conteneurs (4) transportés par lesdits moyens de transport (3), **caractérisée en ce que** ledit châssis (2) supporte au moins un marchepied (20) qui peut se déplacer entre une position active, dans laquelle il définit une surface d'appui (20a) pour au moins un pied de l'opérateur, disposée à distance au-dessus du sol, et au moins une position inactive, dans laquelle il occupe un espace plus petit, latéralement par rapport audit châssis (2), par rapport à ladite position active.

2. La machine d'étiquetage selon la revendication 1, **caractérisée en ce que** ledit châssis (2) comprend une base (13), qui supporte lesdits moyens de transport (3), et au moins une structure de support (16), qui est disposée à proximité de ladite base (13) et supporte ladite au moins une unité d'étiquetage (5).

3. La machine d'étiquetage selon la revendication 1, **caractérisée en ce que** ledit marchepied (20) est muni de moyens pour reposer (21) sur le sol.

4. La machine d'étiquetage selon la revendication 3, **caractérisée en ce que** lesdits moyens d'appui (21) sur le sol sont adaptés pour passer d'un état replié, qui peut être adopté lorsque ledit marchepied (20) est dans ledit état inactif, dans lequel ils sont repliés contre ledit marchepied (20), à un état déployé, qui peut être adopté lorsque ledit marchepied (20) est dans ledit état actif, dans lequel ils sont adaptés pour s'engager sur le sol.

5. La machine d'étiquetage selon les revendications 3 ou 4, **caractérisée en ce que** lesdits moyens d'appui (21) sont disposés sensiblement à l'extrémité de ledit marchepied (20) qui est située, avec ledit marchepied (20) dans ladite position active, du côté opposé dudit châssis (2).

6. La machine d'étiquetage selon une ou plusieurs des revendications précédentes, **caractérisée en ce que** ledit marchepied (20), dans ladite condition inactive, est disposé au moins partiellement à l'intérieur de l'espace périphérique occupé par ledit châssis (2).

7. La machine d'étiquetage selon une ou plusieurs des revendications précédentes, **caractérisée en ce que** ledit marchepied (20) est monté de manière à pouvoir se déplacer de manière coulissante, par rapport audit châssis (2), entre ledit état actif et ledit état inactif.

8. La machine d'étiquetage selon une ou plusieurs des revendications précédentes, **caractérisée en ce que** ledit marchepied (20) est relié audit châssis (2) au moyen d'au moins une paire de liaisons (25) qui peuvent osciller, sont sensiblement parallèles entre elles et sont disposées selon un parallélogramme articulé.

9. La machine d'étiquetage selon une ou plusieurs des revendications précédentes, **caractérisée en ce que** ledit marchepied (20) est relié, à l'une de ses extrémités, audit châssis (2) de manière à pouvoir osciller autour d'un axe de rotation sensiblement parallèle au sol.

10. La machine d'étiquetage selon une ou plusieurs des revendications précédentes, **caractérisée en ce que** ledit marchepied (20) est monté sur ladite base (13) dans une position proche de ladite unité d'étiquetage (5).

11. La machine d'étiquetage selon une ou plusieurs des revendications 2 à 10, **caractérisée en ce que** ledit marchepied (20) est monté sur ladite structure de support (16).

12. La machine d'étiquetage selon une ou plusieurs des revendications précédentes, **caractérisée en ce qu'**elle comprend des moyens amovibles pour verrouiller (28) ledit marchepied (20) dans ledit état inactif et dans ledit état actif.

13. La machine d'étiquetage selon une ou plusieurs des revendications précédentes, **caractérisée en ce qu'**elle comprend des moyens de capteur (30) de la présence de ledit marchepied (20) dans ledit état actif et dans ledit état inactif.

14. La machine d'étiquetage selon la revendication 13, **caractérisée en ce que** lesdits moyens de capteur (30) sont reliés à des moyens de signalisation (31) qui peuvent être activés sur commande à la suite de la détection, par lesdits moyens de capteur (30), du positionnement dudit marchepied (20) dans une position intermédiaire entre ledit état actif et ledit état inactif.

15. La machine d'étiquetage selon une ou plusieurs des revendications 2 à 14, **caractérisée en ce que** ladite structure de support (16) peut être engagée de manière amovible, grâce à des moyens de fixation (35), sur ladite base (13), des moyens de détection (36) étant prévus pour détecter le positionnement de ladite structure de support (16) dans la condition d'engagement avec ladite base (13).

16. La machine d'étiquetage selon la revendication 15, **caractérisée en ce que** lesdits moyens amovibles pour verrouiller (28) peuvent être désactivés afin de permettre la transition dudit marchepied (20) de ladite condition inactive à ladite condition active, lors de la détection, par lesdits moyens de détection (36), du positionnement dans la condition d'engagement de ladite structure de support (16) avec ladite base (13).

17. La machine d'étiquetage selon la revendication 15, **caractérisée en ce que** lesdits moyens de fixation (35) peuvent être désactivés lors de la détection, par lesdits moyens de capteur (30), du positionnement de ledit marchepied (20) dans ladite condition inactive.
